Europäisches Patentamt

European Patent Office

Office européen des brevets

(19)

(11) Publication number: 0 434 349 A1

## EUROPEAN PATENT APPLICATION

(21) Application number: 90313796.6

(22) Date of filing: 17.12.90

(51) Int. Cl.⁵: H02B 1/20

(30) Priority: 22.12.89 US 455587

(43) Date of publication of application:
26.06.91 Bulletin 91/26

(84) Designated Contracting States:
AT BE CH DE DK ES FR GB GR IT LI LU NL SE

(71) Applicant: HAWKER FUSEGEAR LIMITED

Burton-on-the Wolds, Leicestershire(GB)

(72) Inventor: Norden, Alexander Roy
350 Central Park West
New York, NY 10025(US)

(74) Representative: Spoor, Brian et al
c/o E.N. LEWIS & TAYLOR 144 New Walk
Leicester, LE1 7JA(GB)

(54) Electrical apparatus.

(57) An electrical device for connection to at least three parallel spaced-apart bus bars (A, B, C) comprises multiple poles (I, II, III) each having first and second terminals (22, 24) spaced apart end to end of the poles (I, II, III). The first terminals (22) are arranged in a row and associated with each of the first terminals (22) is a link (10a, 10b, 10c) for connecting that first terminal (22) to any one of the bus bars (A, B, C), when the row of first terminals (22) is parallel to the bus bars (A, B, C). The link (10a, 10b, 10c) comprises a device terminal (12a, 12b, 12c) for making a connection to a first terminal (22) of a pole (I, II, III) a bus bar terminal (36) for making connection to a bus bar (A, B, C) and a conductor (14) between the terminals (12a, 12b, 12c and 36). The links (10a, 10b, 10c) are shaped and proportioned alike and are interchangeable for connecting any of the first terminals (22) to any of the at least three bus bars (A, B, C).

EP 0 434 349 A1

## ELECTRICAL APPARATUS

The present invention relates to electrical equipment in which electrical devices have terminals connected to three-phase bus bars.

Electrical devices such as switches, circuit breakers and fuse holders are routinely assembled to form panel boards, switchboards, etc. in which the electrical devices are connected to a set of parallel bus bars. In a widely used form of construction, the terminals of the electrical devices are aligned in a row that extends parallel to the bus bars. These terminals may be the multiple terminals of a two or three pole electrical device or they may be the terminals of an assembled group of single pole devices, or combination of single pole and multi pole devices. These known devices have the disadvantage that two or more different forms of links are required to connect the device terminals to the bus bars.

It is an object of the present invention to provide an electrical device in which the above disadvantages are reduced or substantially obviated.

The invention provides an electrical device for connection to at least three parallel spaced-apart bus bars which device comprises multiple poles each having first and second terminals spaced apart end to end of the pole, the first terminals of the multiple poles being arranged in a row and, associated with each of the first terminals, a link for connecting that first terminal to any one of the bus bars, when the row of first terminals is parallel to the bus bars, the link comprising a device terminal for making a connection to a first terminal of a pole, and a bus bar terminal for making connection to a bus bar, the link further comprising a conductor between the device terminal and the bus bar terminals, characterised in that the links are shaped and proportioned alike and are interchangeable for connecting any of the first terminals to any of the at least three bus bars.

According to the invention, only one form of link is used to connect the line terminal of a single pole device or each line terminal of a multi-pole device to any of the set of bus bars, the line terminals being in a row parallel to the bus bars.

As will be described in more detail, in a preferred embodiment of a device according to the invention, a link is provided having a link terminal for connection to a device terminal and having a bus bar connecting terminal, and having an off-set length of the link interconnecting its terminals. The link as a whole can be arranged in any of three discrete orientations from the device terminal. The terminals of the link and the device have a keyed relationship which makes it possible to attain each of these discrete orientations.

The bus bar connecting terminal of the link is adapted to make connection with a bus bar in any of the three orientations of the link. In the preferred embodiment of the invention described below and shown in the drawings, the bus bar connecting terminal of the link makes plug-in connection to one of the bus bars in each of the three alternative orientations of the link.

In a particularly preferred embodiment of the device according to the invention, the link can extend upward from the device terminal, or downward, or to one side, in three directions that are at right angles to one another, and the plug-in terminal of the link has a cluster of contact fingers that grip a bus bar in each of those three orientations of the link.

A preferred embodiment of a device according to the invention will now be described with reference to the accompanying drawings, in which

Figures 1 and 1a
are schematic side and end views, respectively, of an electrical device assembled to bus bars;

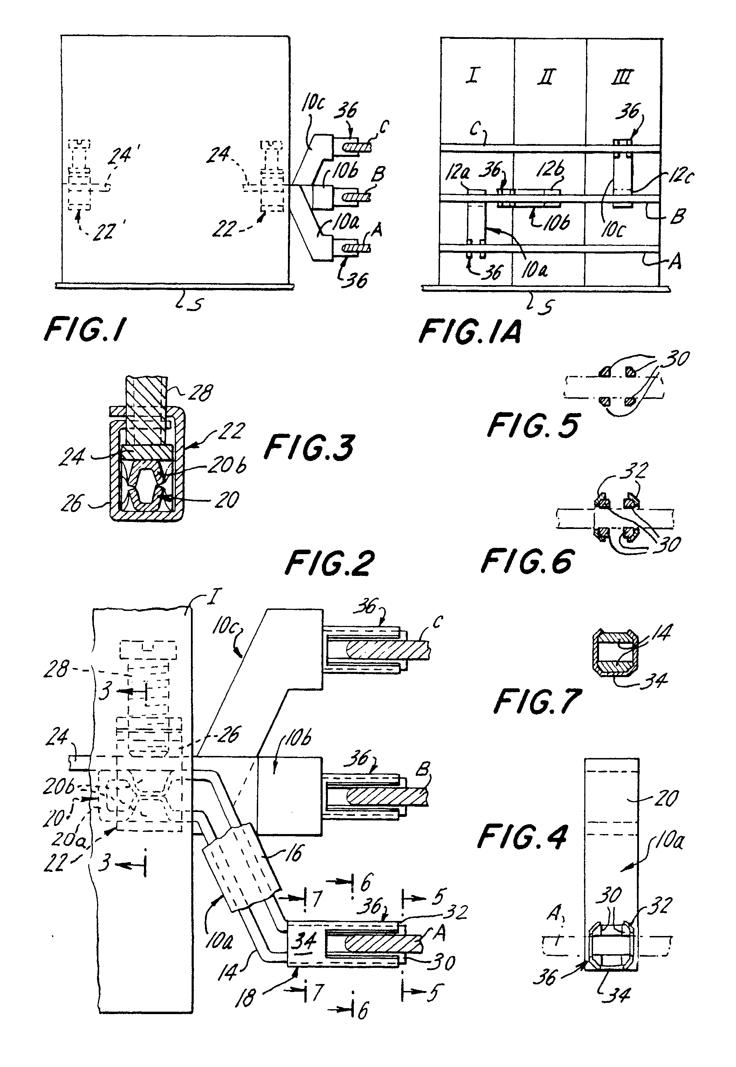

Figure 2
is a fragmentary view of the apparatus in Figure 1, drawn to a larger scale;

Figure 3
is a cross section of a terminal of an electrical device and a device terminal of a connecting link on line 3-3 of Figure 2;

Figure 4
is a view of a connecting link as shown in Figure 2 as seen from the left of Figure 2, and

Figures 5, 6 and 7
are cross sections of the plug in terminal of a connecting link on the 5-5, 6-6 and 7-7, respectively of Figure 2.

Three poles I, II and III of a three pole electrical device are shown in Figure 1A, connected to bus bars A, B and C by corresponding connecting links 10a, 10b and 10c. The bus bars are long and thin in shape and are arranged parallel to each other and spaced apart regularly. The edges of the bars are coplanar and their broad sides are parallel. The bars are supported in this configuration by any of various known forms of insulation (not shown).

Terminals 22 of the device are spaced apart in a row of a common level spaced from support S to which the device is secured. The terminals 22 are at substantially the same level as the bus bar B. Links 10a, 10b and 10c are identical and essentially rigid. The three links have device terminals 12a, 12b and 12c secured to line terminals 22 as can be seen in Figure 1a. Load terminals 24 at the opposite ends of poles I, II and III are for connection to protected or controlled circuits. Because the line and load terminals are often interchangeable they are referred to below more generally as first and second terminals.

In the device shown, units I, II and III are the poles of a circuit breaker. However, it is common for electrical devices to be of the so-called unit-pole construction, in which each pole I, II and III is a mechanically separate device. Any number of unit-pole electrical devices I may be assembled side by side, each equipped with its link 10a; any number of unit pole devices II equipped with its link 10b may be assembled side by side; and any number of unit pole devices III equipped with respective links 10c may be assembled side by side. Such unit pole devices may be assembled in any chosen mixed sequence. Moreover, any two poles I and II or II and III may be a unitary two pole electrical device. The three pole electrical device shown in Figure 1A represents a row of such devices assembled side by side. Furthermore, a series of single pole and two pole devices equipped with a link for each pole may be used together with three pole devices.

Pole I of Figure 1A is shown in Figure 2 with its link 10a; and links 10b and 10c also appear in Figure 2 for poles II and III behind pole I. Each link comprises a formed metal strip 14 of a high conductivity metal such as copper, a shroud 16 of moulded insulation, and a spring clip 18. The terminal 22 of pole I grips the link terminal 20, designated 12a, 12b and 12c in Figure 1a. Each connecting link 10a, 10b and 10c in Figure 2 has a plug-in terminal 36 that grips and makes low-resistance contact to a corresponding bus bar A, B or C.

The formed metal strip 14 has a bent portion 20a forming part of the link terminal 20. Crimped portions 20b of the strip 14 have mutually abutting edges. Accordingly, the region of strip 14 near bent portion 20a forms a link terminal whose cross section is essentially square and rigid.

Pole I (like poles II and III) has a terminal conductor 24, a four-wall clamp 26 and a screw 28 that together form the line terminal 22. As can be seen in Figure 3, the screw 28 is threaded through a top double thickness wall of clamp 26, it bears against conductor 24, and it draws the opposite wall of clamp 26 upward so that the terminal 12a is gripped between a wall of the clamp and conductor 24.

As shown in Figures 4 to 6, the ends of the strip 14 are shaped to provide four contact fingers 30. These fingers form pairs that are spaced apart equally at corners of an imaginary square.

A bus bar is tightly receivable edgewise either vertically or horizontally between pairs of fingers 30. The spring clip 18, which is suitably formed from spring steel, has spring elements 32 which bear against contact fingers 30 and provide contact pressure. The spring clip 18 includes a band 34, as can be seen in Figures 2 and 7, from which the spring elements extend. This band firmly and securely embraces two lengths of strip 14 as can be seen in Figure 7. Before a bus bar is inserted, the space between the contact fingers of each pair of contact fingers is less than the thickness of the bus bar. When a bus bar is forced between the fingers of each pair, they become essentially parallel.

The insulating shroud 16 covers the band 34 of the link 10a. The shroud 16 is not shown in Figure 7 and does not appear in the region of the band 34 of link 10a in Figure 2.

When the plug-in formation 36 comprising the cluster of the fingers 30 and the spring elements 32 is forced onto a bus bar, the contact fingers make highly effective contact to the bus bar. This is true of the plug-in formation 36 of the vertically extending links 10a and 10c, and of the plug-in formation 36 of link 10b, as shown in Figures 1 and 2. Terminals 12a and 36 of the link are parallel to each other but are displaced from each other by the off-set length of the link between those terminals of the link.

The discrete fixed orientation of each link in relation to its electrical device makes it possible for its bus bar terminal to make a plug-in connection to a selected bus bar. The described square (or rectangular) cross-section of the link terminal 20 and the clamping terminal 22 of the electrical device are highly effective for establishing one of the discrete orientations of the link, as described. Many other forms of terminals 20 and 22 can be devised having keying formations such that terminals 20 are gripped properly to pre-position terminals 36 for plug-in assembly to the bus bars as the electrical devices I, II and III slide along support S toward the bus bars.

## Claims

1. An electrical device for connection to at least three parallel spaced-apart bus bars (A, B, C) which device comprises multiple poles (I, II, III) each having first and second terminals (22, 24) spaced apart end to end of the pole (I, II, III), the first terminals (22) of the multiple poles (I, II, III)being arranged in a row and, associated with each of the first terminals (22), a link (10a, 10b, 10c) for connecting that first terminal (22) to any one of the bus bars (A, B, C), when the row of first terminals (22) is parallel to the bus bars (A, B, C), the link (10a, 10b, 10c) comprising a device terminal (12a, 12b, 12c) for making a connection to a first terminal (22) of a pole (I, II, III), and a bus bar terminal (36) for making connection to a bus bar (A, B, C), the link (10a, 10b, 10c) further comprising a conductor (14) between the device terminal (12a, 12b, 12c) and the bus bar terminals (36), characterised in that the links (10a, 10b, 10c) are shaped and proportioned alike and are interchangeable for connecting any of the first terminals (22) to any of the at least three bus bars (A, B, C).

2. Electrical device according to claim 1 characterised in that two of the links (10a, 10b, 10c) extend fixedly at right angles to each other from the corresponding first terminals (22) of the poles (I, II, III), the bus bar terminals (36) of the links (10a, 10b, 10c) being positioned for connection to respective bus bars (A, B, C) when the row of first terminals (22) extends parallel to the bus bars (A, B, C).

3. Electrical device according to claim 1 or claim 2 characterised in that the bus bar terminals (36) of each link (10a, 10b, 10c) comprises a cluster of resilient plug-in contact fingers (30).

4. Electrical device according to claim 3 characterised in that the cluster of plug-in contact fingers (30) comprises four fingers at the corners of an imaginary square for gripping a bus bar (A, B, C) in either of two right angled relationships of the link (10a, 10b, 10c) to the corresponding bus bar (A, B, C).

5. Electrical device according to any of claims 1 to 4 characterised in that the first terminal (22) of each of the poles (I, II, III) comprises a fastener gripping the device terminal (12a, 12b, 12c) of the corresponding link (10a, 10b, 10c) the device terminal (12a, 12b, 12c) of each link (10a, 10b, 10c) having at least one keying formation for establishing a discrete orientation of the link (10a, 10b, 10c) in relation to its pole (I, II, III) with its bus bar terminal (36) in connection making alignment with a bus bar (A, B, C) when the row of first terminals (22) extends parallel to the bus bars.

6. Electrical device according to any of claims 1 to 5 characterised in that three of said poles are unified to constitute a three-pole device, and three of the links (10a, 10b, 10c) are secured to the corresponding first terminals (22) of the three-pole device and have their bus bar terminals (36) pre-positioned in connection making alignment with the three bus bars (A, B, C) respectively, when the row of first terminals (22) extends to the bus bars (A, B, C).

7. Electrical device according to claim 6 characterised in that the device terminal (12a, 12b, 12c) of each link (10a, 10b, 10c) has a keying formation and the first terminal (22) of each pole (I, II, III) is a fastener that grips the device terminal (12a, 12b, 12c) and coacts with the keying formation to establish a discrete orientation of the link (10a, 10b, 10c) in relation to the three pole device so that the bus bar terminals (36) of the links (10a, 10b, 10c) are pre-positioned in connection making alignment with three bus bars (A, B, C) when the row of first terminals (22) extends parallel to the bus bars.

8. Electrical device for connection to a set of three spaced apart bus bars (A, B, C) having mutually parallel wide surfaces and having respective edges in a common plane, the device comprising at least one pole (I, II, III) having first and second terminals (22, 24) at the opposite first and second ends of the pole (I, II, III), and a connecting link (10a, 10b, 10c) having a device terminal (12a, 12b, 12c), a plug-in bus bar terminal (36) and a link conductor (14) between its terminals (12a, 12b, 12c, 36), characterised in that the link (10a, 10b, 10c) is shaped and proportioned for connecting the first terminal (22) of the electrical device to any of the bus bars (A, B, C) when the first end of the pole (I, II, III) is arranged opposite to the edges of the set of bus bars (A, B, C).

9. Electrical device according to claim 8 characterised in that the first terminal (22) of the electrical device is a fastener and in the device terminal (12a, 12b, 12c) of the link (10a, 10b, 10c) is adjustable about an axis extending lengthwise of the pole (I, II, III) and is then gripped in the adjusted condition by the fastener to secure the bus bar terminal (36) of the link (10a, 10b, 10c) in connection making position relative to a selected bus bar (A, B, C) of the set of bus bars.

10. Electrical device according to claim 9 characterised in that the device terminal (12a, 12b, 12c) of the link (10a, 10b, 10c) has a keying shape coacting with the fastener to secure the link (10a, 10b, 10c) selectively in any of three positions in which the bus bar terminal (36) of the link (10a, 10b, 10c) is in connection making position relative to a selected bus bar (A, B, C).

11. Electrical device according to any of claims 8 to 10 characterised in that the link (10a, 10b, 10c) is adjustable to extend in any of three mutually perpendicular directions from the first terminal (22) of the electrical device for locating said bus bar terminal (36) in position for connection to a selected one of the bus bars (A, B, C).

12. Electrical device according to claim 11 characterised in that the bus bar terminal (36) comprises four contact fingers (30) at the corners of an imaginary square for making contact with a selected bus bar (A, B, C) when the link (10a, 10b, 10c) extends in any of the three directions.

13. Electrical apparatus including a set of parallel bus bars (A, B, C), and on electrical device means as claimed in any of claims 1 to 12.

14. Electrical apparatus according to claim 13 characterised in that the first terminals (22) of the poles (I, II, III) are in a row that is parallel to the bus bars (A, B, C) and the conductors (14) of the links (10a, 10b, 10c) extend in various directions from their respective device terminals (12a, 12b, 12c).

15. Electrical apparatus according to claim 14 characterised in that the first terminals (22) of the device grip the respective device terminals (12a, 12b, 12c) and the device terminals (12a, 12b, 12c) of the links (10a, 10b, 10c) have keying functions coacting with the first terminals (22) for fixing the conductors (14) of the links (10a, 10b, 10c) in the various directions in which the conductors (14) extend.

*FIG.1*

*FIG.1A*

*FIG.3*

*FIG.5*

*FIG.6*

*FIG.2*

*FIG.7*

*FIG.4*

European Patent
Office

# EUROPEAN SEARCH REPORT

Application Number

EP    90 31 3796

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4752233 (MORBY ET AL.)<br>* column 2, lines 1 - 53; figures 1, 2 *<br>--- | 1 | H02B1/20 |
| A | DE-U-1990998 (B.B.C. AG)<br>* page 2, last paragraph; figure 1 *<br>--- | 1 | |
| A | EP-A-237388 (HAGER ELECTRO SA)<br>* abstract; figure 1 *<br>----- | 1 | |

|  |  |  | TECHNICAL FIELDS SEARCHED (Int. Cl.5 ) |
|---|---|---|---|
|  |  |  | H02B<br>H02G<br>H01R |

The present search report has been drawn up for all claims

| Place of search | Date of completion of the search | Examiner |
|---|---|---|
| THE HAGUE | 22 FEBRUARY 1991 | WOODALL C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)